(19) **Europäisches Patentamt / European Patent Office / Office européen des brevets**

(11) **EP 2 017 150 A1**

(12) **EUROPEAN PATENT APPLICATION**

(43) Date of publication:
**21.01.2009 Bulletin 2009/04**

(51) Int Cl.:
**B60T 8/1755** (2006.01)  **B60W 40/10** (2006.01)
**B60W 30/04** (2006.01)

(21) Application number: **07111209.8**

(22) Date of filing: **27.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nederlandse Organisatie voor Toegepast- Natuurwetenschappelijk Onderzoek TNO 2628 VK The Hague (NL)**

(72) Inventor: **Jansen, Sven Theodorus Henricus 5702 NX Helmond (NL)**

(74) Representative: **van Loon, C.J.J. et al Vereenigde Johan de Wittlaan 7 2517 JR Den Haag (NL)**

(54) **Rollover propensity signalling system and rollover propensity signalling method**

(57)    A rollover propensity signaling system is described for providing a signal related to a propensity of a vehicle to rollover. The system comprises a first sensor unit (1) comprising at least a first sensor for providing a first sense signal (11) indicative for a sensed value of a first dynamic state variable. The system further has a processing facility (2) for calculating at least a first (O1) and a second output signal (02) as a function of at least the first sense signal. The calculations are based on a model of mechanical properties of the vehicle. The first output signal (O1) is representative for an estimated value of a second dynamic state variable ($d\phi/dt$) of the ve-hicle and the second output signal (02) is related to a propensity of the vehicle to roll-over.

The system further comprises a second sensor unit (3) with at least a second sensor for providing a signal (O1') indicative for a sensed value of the second dynamic state variable.

A comparator (4) compares the estimated value of said state variable with the sensed value of said state variable and provides an error signal (E) indicative for an outcome of the comparison.

A model update facility updates parameters of the model using the error signal (E).

Figure 2

EP 2 017 150 A1

## Description

### Field of the invention

The present invention relates to a rollover propensity signaling system.

The present invention relates to a rollover propensity signaling method.

### Background of the invention

Rollover crashes are one of the most significant safety problems for large vehicles, but also for light vehicles such as pickups, sport utility vehicles, and vans.

In order to reduce the risk of rollover, various systems were developed that warn the driver or intervent in circumstances where a rollover is likely to take place. One such system is known as Electronic Stability Control (ESC). ESC uses automatic braking of individual wheels to prevent the heading from changing too quickly (also denoted as spinning out or oversteer) or not quickly enough (also denoted as plowing out or understeer), and it may contain a dedicated function to prevent rollover. ESC cannot significantly increase the available traction, but maximizes the possibility of keeping the vehicle under control and on the road during extreme maneuvers by using the driver's natural reaction of steering in the intended direction.

Such systems estimate the probability of a rollover (also denoted as rollover propensity) on the basis of measurements of variable representative of a dynamic state of the system, such as the lateral acceleration, the relative velocity of the wheels of the vehicle on both sides, a yaw velocity etc. Apart from the above variables, however, the rollover propensity also strongly depends on the payload carried by the vehicle, e.g. the mass and the nature of the payload e.g. liquid or solid. Known systems reduce the speed of the vehicle, or urge the driver of the vehicle to do so, on the basis of the most heavy and unfavourable payload. Systems based on such a worst-case estimation are disadvantageous as they unnecessarily limit the speed of the vehicle in cases where the vehicle has only a light payload. In cases where the system provides a warning to the driver, the driver may tend to interpret the warning as too cautious and accordingly could ignore it.

### Summary of the invention

It is a purpose of the present invention to provide a system that calculates an indication for the vehicle roll-over propensity without specific information of payload and vehicle properties. The vehicle roll-over propensity depends on the nature of the actual payload, e.g. gaseous, liquid or solid, as well as the weight and weight distribution of the payload, and the properties of the vehicle itself. In accordance therewith the present invention provides a rollover propensity signaling system for providing a signal related to a propensity of a vehicle to rollover, the system comprising,

- a first sensor unit comprising at least a first sensor for providing a first sense signal indicative for a sensed value of a first dynamic state variable,
- a processing facility for calculating at least a first and a second output signal as a function of at least the first sense signal, the calculations being based on a model of mechanical properties of the vehicle, wherein the first output signal is representative for an estimated value of a second dynamic state variable of the vehicle and the second output signal is related to a propensity of the vehicle to roll-over,
- a second sensor unit comprising at least a second sensor for providing a signal indicative for a sensed value of the second dynamic state variable,
- a comparator for comparing the estimated value of said state variable with the sensed value of said state variable, and for providing an error signal indicative for an outcome of the comparison,
- a model update facility to update parameters of the model using the error signal.

The system according to the invention calculates the expected value of the second dynamic state variable from the value of the first dynamic state variable using the model of the mechanical properties of the vehicle. A deviation of the expected value of the second state variable from the actual value implies that the parameters of the model deviate from reality. The system of the present invention uses the value of the deviation to update the parameters of the model. Accordingly, if the payload of the vehicle is changed the system will record a deviation of the actual value of the second dynamic state variable from what was expected and update the model until it substantially corresponds to reality.

In an embodiment the rollover propensity signaling system according to the invention comprises a transmission unit for transmitting the second output signal to an external user interface, and wherein the external user interface comprises an auxiliary sensor for sensing a momentaneous value of a dynamic state variable of the vehicle and a determination unit for determining whether the dynamic state variable is within an acceptable range given the value for the rollover propensity. The rollover propensity may be indicated for example by the estimated lateral acceleration where roll-over is expected to occur. This estimation may take into account the dynamic effect of overshoot. Another indication may be a roll gradient, i.e. a ratio of the roll-angle and the lateral acceleration. Again another indication maybe the roll damping. Whether overshoot will occur in the roll-movement of the vehicle, and if so, the amount thereof, is dependent on the amount of roll-damping and inertia. Accordingly roll-damping is a parameter related to the roll-over propensity. Preferably the selected indicator for the roll-over propensity does not rapidly change, e.g. only when the payload is changed. This allows the second output signal to be transmitted to an auxiliary module at a relatively low frequency, e.g. once a minute. A low transmission rate is in favor of a low energy consumption, system cost and reliability. Suitable indicators that do not rapidly change are a maximum allowed lateral acceleration, a roll gradient etc. In an embodiment the second output signal is transmitted wireless to the user interface. This has the advantage that the system can be autonomous. On the other hand, it is not essential that the second output signal is transmitted wirelessly, as more and more vehicles are equipped with a data bus (e.g. CAN), which may provide for a wired transmission of the second output signal to the user interface.

Various options are possible for the choice of the sensor units, as long as the value of the second dynamic state variable can be estimated from the first dynamic state variable, using the properties of the model. By way of example the sensor units may measure a roll-angle, a state of the wheel suspension on both sides of the vehicle, a velocity of the vehicle, a yaw acceleration, a comparison of rotational velocities of the wheels on both side of the vehicle. Preferably however, the first and the second sensor unit comprise sensors for sensing a parameter that is relatively independent on the position of the sensor and that allow for a substantially autonomous measurement. Such sensors further also denoted as autonomous sensors, are for example inertia sensors (accelerometers), but also include angular rate sensors, magnetometers, and GPS receivers. The first and the second sensor unit can be integrated. A system with autonomous sensors can be easily integrated in a compact module, as autonomous sensors can give a meaningful sensor signal in virtually any position. The first autonomous sensor may for example sense a lateral acceleration, whereas the second senses a roll rate, i.e. the first derivative of the roll angle. Alternatively, however, the lateral acceleration can be estimated from vehicle speed (e.g. from GPS) combined with yaw velocity (angular rate sensor). Likewise the rollangle could be measured by GPS.

Sensor signals used in the system and method according to the invention can be obtained from or shared with other systems on the vehicle. For example a GPS signal provided by a navigation tool may be used as a first or a second sense signal.

It is not necessary that the sensed signals are processed in real time towards one or more indicators of rollover propensity. In an embodiment the system according to the invention may have a real-time processing part that exchanges data with a post-processing part for calculation of the rollover propensity indicator(s). Until the processed results are received from said post-processor part the system may provide a fail safe indication for the roll-over propensity.

The roll angle and its derivatives roll rate and roll acceleration will also be commonly denoted as roll motion.

A method according to the invention for determining a propensity of a vehicle to rollover comprises the steps of

- providing at least a first sense signal indicative for a sensed value of a first dynamic state variable,
- calculating at least a first and a second output signal as a function of at least the first sense signal, the calculations being based on a model of mechanical properties of the vehicle, wherein the first output signal is representative for an estimated value of a second dynamic state variable of the vehicle and the second output signal is indicative for a propensity of the vehicle to roll-over,
- providing a signal indicative for a sensed value of said second dynamic state variable,
- comparing the estimated value of said second dynamic state variable with the sensed value of said second synamic state variable, and
- providing an error signal indicative for an outcome of the comparison,
- update parameters of the model using the error signal.

**Brief description of the drawings**

These and other aspects of the invention are described in more detail with reference to the drawing. Therein:

Figure 1 schematically shows a vehicle having a roll-angle $\varphi$,
Figure 2 schematically shows a first embodiment of a system according to the present invention,
Figure 3 schematically shows a second embodiment of a system according to the present invention,
Figure 4 schematically shows a third embodiment of a system according to the present invention,
Figure 5 schematically shows a method according to the present invention

**Detailed description of the invention**

In the following detailed description numerous specific details are set forth in order to provide a thorough understanding of the present invention. However, it will be understood by one skilled in the art that the present invention may be practiced without these specific details. In other instances, well known methods, procedures, components, and circuits have not been described in detail so as not to obscure aspects of the present invention.

Some portions of the detailed descriptions that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

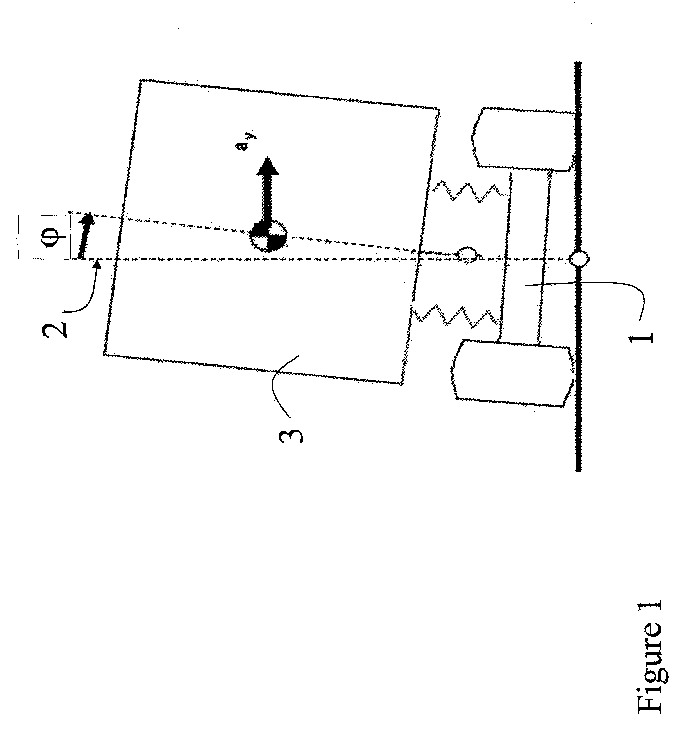

Figure 1 schematically shows the roll-angle φ of a vehicle caused by lateral acceleration ay occurring when the vehicle drives through a corner. The roll-angle φ is composed from a first component, the angle between the wheel axis 1 and the plane orthogonal to the direction 2 of gravitation, and a second component, the angle between the chassis 3 and the wheel axis 1.

The lateral acceleration is the product of the yaw velocity dθ/dt and the linear velocity of the vehicle during stationary cornering:

$$a_y = v.\frac{d\theta}{dt} \tag{1}$$

The relation between the roll-angle φ and the lateral acceleration can be modeled as a differential equation that represents the mechanical properties of the vehicle.

$$a_y = A*\ddot{\varphi} + B*\dot{\varphi} + Q*\varphi \tag{2}$$

Therein:

$\dot{\varphi}$ and $\ddot{\varphi}$ respectively indicate the first and the second derivative of the roll-angle φ

$$A = \frac{I}{m*h}, \text{ and} \tag{3}$$

$$B = \frac{c}{m*h} \tag{4}$$

Therein:

m is the mass of the vehicle

The ratio $\dfrac{c}{m.h}$ is a measure for the roll-damping.

Q represents $\dfrac{a_y}{\varphi}$ , which is the static ratio between the lateral acceleration and the roll-angle.

h is the height of the centre of mass, and

I is the moment of inertia around the axis of roll motion.

By solving the differential equation results in an estimated value for the roll angle and indicates whether there is a risc of roll-over.

As long as the values for A, B and Q are known, it is not necessary to know the value of the parameters from which they depend.

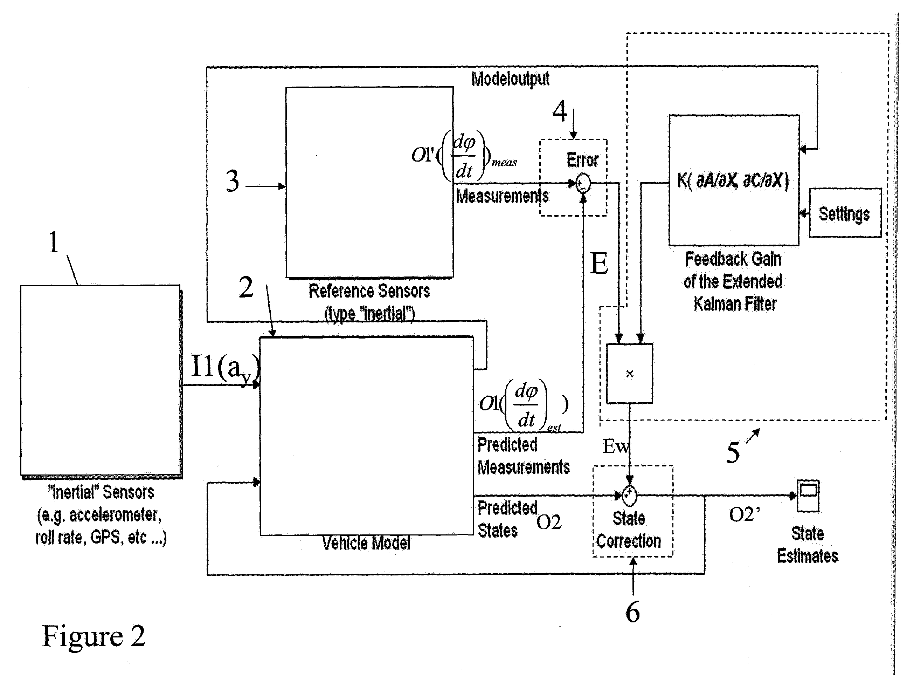

A block schematic drawing of an embodiment of a system that uses the above-model is shown in Figure 2:

The system shown comprises a first sensor unit 1 comprising at least a first sensor for providing a first sense signal I1($a_y$) indicative for a sensed value of a first dynamic state variable. In the embodiment shown the first sense signal is the lateral acceleration ay.

Alternatively the first sensor unit comprises a linear speed sensor and a yaw rate sensor and a computational unit for calculating the lateral acceleration from the linear speed and the yaw rate.

The system further has a processing facility 2 for calculating at least a first output signal 01 $(d\varphi/dt)_{est}$ and a second output signal 02 as a function of at least the first sense signal, wherein the calculations are based on the above described model for the mechanical properties of the vehicle. The first output signal 01 is representative for an estimated value of a second dynamic state variable. In the embodiment described the second dynamic state variable is the roll velocity $d\varphi/dt$ of the vehicle. However the second dynamic state variable may be any variable that can be estimated from the first dynamic state variable using the model for the mechanical properties of the vehicle. The second output signal (02) is related to a propensity of the vehicle to roll-over. The second output signal may be related to said propensity in the sense that it indicates a momentaneous probability of roll-over, or it may for example be a maximum allowed value for a dynamic state variable. In a preferred embodiment the second output value is indicative for the value Q.

The system includes a second sensor unit 3 comprising at least a second sensor for providing a signal 01' $((d_\varphi/dt)_{meas.})$ indicative for a sensed value of the second dynamic state variable, here $(d\varphi/dt)_{meas.}$

A comparator 4 compares the estimated value $(d_\varphi/dt)_{est}$ of said state variable with the sensed value $(d\varphi/dt)_{meas}$ of said state variable, and for providing an error signal E indicative for an outcome of the comparison.

A model update facility is provided to update parameters of the model using the error signal E. In the embodiment shown, the rollover propensity signaling system comprises a weighting unit 5 to calculate a gain signal and to provide a weighted error signal Ew. A correction unit 6 calculates a corrected second output signal 02' from the second output signal 02 and the weighted error signal Ew.

In the embodiment shown the model update facility comprises a Kalman Filter. The Kalman filter estimates a new state $\hat{x}_{k|k-1}$ of the system from a previous state $\hat{x}_{k-1|k-1}$, and a control input variable $u_k$ on the basis of a state transition matrix $F_k$ and a control input model $C_k$ according to the following relation.

$$\hat{x}_{k|k-1} = F_k\hat{x}_{k-1|k-1} + C_k u_k \tag{5}$$

Here the state vector is the set of parameters A, B, Q, $\varphi$, $\dot{\varphi}$, and $\ddot{\varphi}$.

Furthermore a prediction $P_{k|k-1}$ is made of an estimate covariance as follows

$$P_{k|k-1} = F_{k|k-1}P_{k-1|k-1}F_k^T + W_k , \tag{6}$$

wherein $P_{k-1|k-1}$ is the updated estimate covariance in the previous state k-1, and

$W_k$ is the covariance matrix for $x_k$.

Update of the model takes place in the following steps:

First a difference $\tilde{y}_k$ is calculated between an observed output variable $z_k$ (here $(d_\varphi/dt)_{meas}$) and a predicted value for said output variable. Here the predicted value is

$$\left(\frac{d\varphi}{dt}\right)_{est} = H_k \hat{x}_{k|k-1}. \tag{7}$$

Accordingly the difference $\widetilde{y}_k$, provided by comparator 4, is:

$$\widetilde{y}_k = z_k - H_k \hat{x}_{k|k-1} \tag{8}$$

Subsequently the innovation or residual covariance $S_k$ is calculated by:

$$S_k = K_k P_{k|k-1} H_k^T + R_k, \tag{9}$$

Herein $R_k$ is the covariance matrix for the observed output variable $z_k$. In this case, where the observed output variable is a scalar, the covariance matrix reduces to a scalar too, the variance in the observed output variable.

From the updated estimate covariance $P_{k|k-1}$ obtained with Eq. 6 and the residual covariance $S_k$ obtained with Eq. 9 the gain factor $K_k$ is calculated as follows:

$$K_k = P_{k|k-1} H_k^T S_k^{-1} \tag{10}$$

Using this gain factor the state is updated by correction unit 6as

$$\hat{x}_{k|k} = \hat{x}_{k|k-1} + K_k \widetilde{y}_k \tag{11}$$

The estimate covariance P is now updated for state k using the following equation:

$$P_{k|k} = (I - K_k H_k) P_{k|k-1} \tag{12}$$

The system according to the present invention may be implemented in a single unit which provides a roll-over propensity signal that is indicative for the momentaneous probability of roll-over. Such signal may be indicated to the user on a scale from 0 to 100 on a display. The display may be provided with color markings to facilitate a rapid interpretation by the driver, e.g. green (safe), yellow (be aware), red (acute danger).

Alternatively the roll-over propensity signal may be used to directly control the vehicle.

Although in Figure 2 the state correction unit 6 is shown as a simple addition operation, it may contain additional logic to control the update process. Similarly the multiplication block for multiplying the error E with the Feedback gain may be extended with logic operations.

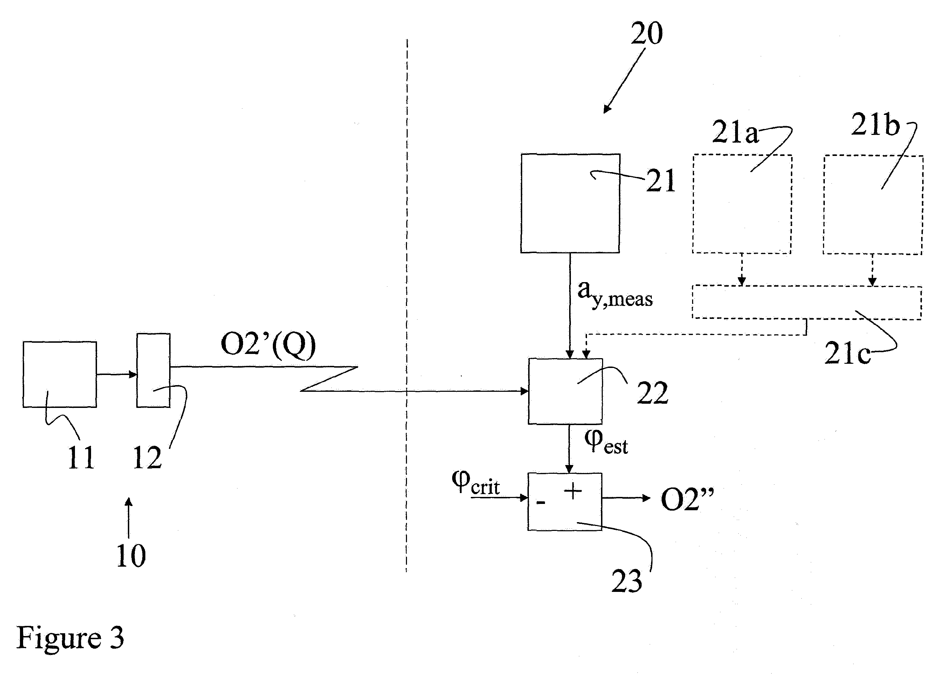

Figure 3 schematically shows another embodiment of the system 10 that in addition comprises a transmission unit 12 for transmitting the second output signal to an auxiliary module 20. The second output signal is computed with a system 11, for example the system described with reference to Figure 2. The system 11 is for example attached to a part of the vehicle that is arranged to carry the payload. If the vehicle comprises more than one unit, it is preferably attached to the unit most sensitive to roll-over, which is usually the last one. The auxiliary module is for example a user interface 20 that is mounted inside the cabin of the vehicle. The second output signal transmitted by the transmission unit 12 is preferably a signal related to the roll-over propensity that is relatively constant. Such a variable is for example the estimation for the ratio Q between the lateral acceleration ay and the roll-angle $\varphi$. The external user interface 20 comprises an auxiliary sensor 21 for sensing a momentaneous value of a dynamic state variable of the vehicle, here the lateral acceleration ay and a determination unit 22,23 for determining whether the dynamic state variable ay is within an acceptable range given the value for the rollover propensity. In the embodiment shown the determination unit comprises a divider 22 for dividing the estimated value for Q provided with the second output signal 02' by the measured value for the lateral acceleration $a_y$. The resulting quotient is an estimation for the roll-angle $\varphi$ under static circumstances. A comparator 23 compares this value with a critical value $\varphi_{crit}$, and provides an output signal 02" indicative for the rollover propensity. The value of the output signal 02" may be made visible on a display, but may otherwise be signaled to the driver in an audible form. In again another embodiment the auxiliary module comprises a facility for directly controlling the vehicle e.g. if the estimated roll angle tends to approach the critical value the system may control the vehicle by controlling the motor or even by actively braking the vehicle.

In again another embodiment the second output signal 02' transmitted by the transmission unit 12 is the estimated critical lateral acceleration, $a_{y,est}$, i.e. the value for the lateral acceleration, which, if exceeded is expected to result in a roll-over of the vehicle. In that embodiment the determination unit need only comprise a comparator 23 that compares the measured value for the lateral acceleration $a_{y,meas}$ with the estimated critical value $a_{y,est}$, and provide a warning signal or a vehicle speed control signal if the critical value tends to be exceeded. The estimation procedure for the critical lateral acceleration may take into account that the roll-angle may show an overshoot after a sudden change of lateral acceleration.

In both examples the second output signal O2' related to the roll-over propensity is relatively constant. In practice it only changes if the payload of the vehicle is changed. This has the advantage that the second output signal need only be transmitted at a low frequency, e.g. once a minute or for example only after a standstill of the vessel. This is particularly advantageous if the system is applied as an autonomous module that can be attached to the vehicle. The low transmission frequency allows for a low energy use. Although a wireless transmission of the second output signal O2' is favorable, this is not strictly necessary. Alternatively the second output signal 02' may be transmitted via a CAN-bus for example.

In again another embodiment the auxiliary module 20 shown in Figure 3 does not need a lateral acceleration sensor 21. Instead the auxiliary module 20 comprises (indicated by broken lines) a yaw sensor 21a, a velocity sensor 21b and a computation unit 21c, that compute the lateral acceleration from the linear velocity and the yaw velocity.

Although various options are possible, the sensors used are preferably autonomous sensors. Autonomous sensors can be implemented locally, and accordingly do not need transmission of signals from more remote sensors.

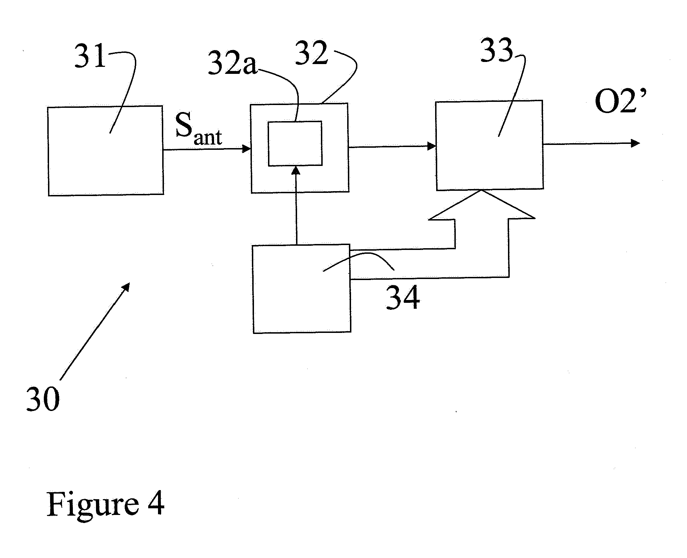

Figure 4 shows a further embodiment of a rollover propensity signaling system 33 of the invention. The rollover propensity signaling system is further arranged to receive an anticipation signal Sant from a navigation system 31. The anticipation signal of the navigation system provides information about expected changes in direction of the vehicle and the rollover propensity signaling system provides a second output signal 02' as a function of said anticipation signal. In particular if the rollover propensity system has direct control over the vehicle, this has the advantage that the system can gradually respond to forthcoming changes of direction, e.g. by gradually slowing down the vehicle if necessary. The anticipation signal is for example indicative for a curvature of the road. Given this indication and the current value for the linear velocity of the vehicle a calculation unit 32 can calculate the expected lateral acceleration. On the basis of the expected value for the lateral acceleration the roll-over propensity signaling system 33 can gradually slow down the linear velocity of the vehicle, or urge the driver to do so. In the embodiment shown the calculation unit includes a combination unit 33a that calculates the maximum of the momentaneous lateral acceleration measured by sensor 34 and the expected lateral acceleration. This enables the rollover propensity signaling system 33 to still accurately operate if the route of the driver deviates from what is scheduled by the navigation system 31.

As the rollover propensity signaling system according to the invention is preferably autonomous, it preferably comprises a battery supply. The batteries used may be reloadable. In the embodiment shown the system comprises a converter 34 for converting movement of the system into electrical energy to supply the system. The vehicle will be subject to strong movements when in use. A converter mounted near the rollover propensity signaling system converts energy from these movements to supply the system, therewith obviating any external energy source. In the embodiment shown, the converter additionally functions as a sensor. In particular it functions as a lateral acceleration sensor 34 in that it generates a voltage dependent on the lateral acceleration.

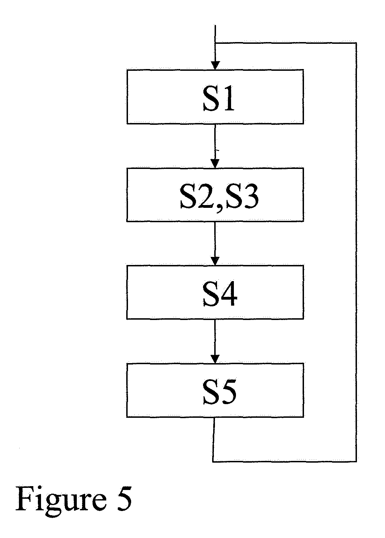

Figure 5 schematically shows a method for determining a propensity of a vehicle to rollover. In a step S1 of the method at least a first sense signal (I1) is provided that is indicative for a sensed value of a first dynamic state variable.

In step S2 at least a first (O1) and a second output signal (O2) are calculated as a function of at least the first sense signal. The calculations are based on a model of mechanical properties of the vehicle. The first output signal (O1) is representative for an estimated value of a second dynamic state variable $(d\varphi/dt)$ of the vehicle and the second output signal (O2) is indicative for a propensity of the vehicle to roll-over.

In step S3, which may be performed after or before step 2 a signal (O1') is provided that is indicative for a sensed value of said second dynamic state variable.

In step S4 the estimated value of said second dynamic state variable is compared with the sensed value of said second synamic state variable, and an error signal E is provided that is indicative for an outcome of the comparison.

In step S5 parameters of the model are updated using the error signal.

The steps S1 to S5 are repeated.

While the invention has been illustrated and described in detail in the drawings and foregoing description, such illustration and description are to be considered illustrative and exemplary and not restrictive; the invention is not limited to the disclosed embodiments.

Other variations to the disclosed embodiments can be understood and effected by those skilled in the art in practicing the claimed invention, from a study of the drawings, the disclosure and the appended claims. In the claims the word "comprising" does not exclude other elements or steps, and the indefinite article "a" or "an" does not exclude a plurality. A single processor or other unit may fulfil the functions of several items recited in the claims. The mere fact that certain measures are recited in mutually different claims does not indicate that a combination of these measures cannot be used to advantage. Any reference signs in the claims should not be construed as limiting the scope.

**Claims**

1. A rollover propensity signaling system for providing a signal related to a propensity of a vehicle to rollover, the system comprising,

    - a first sensor unit (1) comprising at least a first sensor for providing a first sense signal (11) indicative for a sensed value of a first dynamic state variable,
    - a processing facility (2) for calculating at least a first (O1) and a second output signal (O2) as a function of at least the first sense signal, the calculations being based on a model of mechanical properties of the vehicle, wherein the first output signal (O1) is representative for an estimated value of a second dynamic state variable of the vehicle and the second output signal (O2) is related to a propensity of the vehicle to roll-over,
    - a second sensor unit (3) comprising at least a second sensor for providing a signal (O1') indicative for a sensed value of the second dynamic state variable,
    - a comparator (4) for comparing the estimated value of said second dynamic state variable with the sensed value of said state variable, and for providing an error signal (E) indicative for an outcome of the comparison,
    - a model update facility (5, 6) to update parameters of the model using the error signal.

2. A rollover propensity signaling system (10) according to claim 1, comprising a transmission unit (12) for transmitting the second output signal (O2') to an auxiliary module (20), wherein the auxiliary module comprises an auxiliary sensor (21) for sensing a momentaneous value ($a_{y,meas}$) of a dynamic state variable (ay) of the vehicle and a determination unit (22,23) for determining whether the dynamic state variable is within an acceptable range given a value indicated by the second output signal.

3. A rollover propensity signaling system according to claim 2, wherein the auxiliary module (20) comprises a user interface.

4. A rollover propensity signaling system according to claim 2, wherein the auxiliary module (20) comprises a facility for directly controlling the vehicle.

5. A rollover propensity system according to claim 2, wherein the second output signal (O2') is transmitted wireless to the auxiliary module (20).

6. A rollover propensity signaling system according to claim 1, wherein the model update facility comprises a weighting unit (5) to calculate a gain signal and to provide a weighted error signal (Ew).

7. A rollover propensity signaling system according to claim 6, comprising a correction unit (6) to calculate a corrected second output signal (O2') from the second output signal (02) and the weighted error signal (Ew).

8. A rollover propensity signaling system according to claim 7, wherein the model update facility includes the weighting unit (5) and the correction unit (6).

9. A rollover propensity signaling system according to one of the previous claims, wherein the first (1) and the second (3) sensor unit comprise autonomous sensors.

10. A rollover propensity signaling system according to one of the previous claims, further being arranged to receive an anticipation signal (Sant) from a navigation system (31), wherein the anticipation signal of the navigation system provides information about expected changes in direction and the rollover propensity signaling system provides a second output signal (O2') as a function of said anticipation signal.

**11.** A rollover propensity signaling system according to one of the previous claims, comprising a battery supply.

**12.** A rollover propensity signaling system (30) according to one of the previous claims, comprising a converter (34) for converting movement of the system into electrical energy to supply the system.

**13.** A rollover propensity signaling system according to claim 12, wherein the converter (34) additionally functions as a sensor.

**14.** A method for determining a propensity of a vehicle to rollover comprising the steps of

- providing at least a first sense signal (I1) indicative for a sensed value of a first dynamic state variable,
- calculating at least a first (O1) and a second output signal (02) as a function of at least the first sense signal, the calculations being based on a model of mechanical properties of the vehicle, wherein the first output signal (O1) is representative for an estimated value of a second dynamic state variable ($d\phi/dt$) of the vehicle and the second output signal (02) is indicative for a propensity of the vehicle to roll-over,
- providing a signal (O1') indicative for a sensed value of said second dynamic state variable,
- comparing the estimated value of said second dynamic state variable with the sensed value of said second dynamic state variable, and
- providing an error signal indicative for an outcome of the comparison,
- update parameters of the model using the error signal.

Figure 1

Figure 2

Figure 3

Figure 4

Figure 5

European Patent
Office

## EUROPEAN SEARCH REPORT

Application Number

EP 07 11 1209

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2004 038000 A1 (CONTI TEMIC MICROELECTRONIC [DE]) 16 March 2006 (2006-03-16) | 1,9,14 | INV. B60T8/1755 B60W40/10 B60W30/04 |
| Y | * figure 1 * ----- | 10,11 | |
| Y | WO 03/021190 A (TNO [NL]; HOOGVELT RONALD BOUDEWIJN JOZE [NL]) 13 March 2003 (2003-03-13) * claims 1,2 * ----- | 10 | |
| Y | US 6 038 495 A (SCHIFFMANN JAN KONRIED [US]) 14 March 2000 (2000-03-14) | 11 | |
| A | * figures 1,2 * ----- | 1,14 | |
| A | US 2006/178808 A1 (WU FUBANG [US] ET AL) 10 August 2006 (2006-08-10) * paragraphs [0035], [0036] * ----- | 1,14 | |
| A | GB 2 419 213 A (FORD GLOBAL TECH LLC [US]) 19 April 2006 (2006-04-19) * figures 2,6,6a * ----- | 1,14 | TECHNICAL FIELDS SEARCHED (IPC) |
| A | DE 102 34 593 A1 (BOSCH GMBH ROBERT [DE]) 19 February 2004 (2004-02-19) * figure 3 * ----- | 1,14 | B60T B60W |

The present search report has been drawn up for all claims

| Place of search | Date of completion of the search | Examiner |
|---|---|---|
| Munich | 21 November 2007 | Colonna, Massimo |

EPO FORM 1503 03.82 (P04C01)

**ANNEX TO THE EUROPEAN SEARCH REPORT
ON EUROPEAN PATENT APPLICATION NO.**

EP 07 11 1209

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2007

| Patent document cited in search report | | Publication date | Patent family member(s) | | Publication date |
|---|---|---|---|---|---|
| DE 102004038000 | A1 | 16-03-2006 | NONE | | |
| WO 03021190 | A | 13-03-2003 | NL | 1011873 C2 | 24-10-2000 |
| US 6038495 | A | 14-03-2000 | NONE | | |
| US 2006178808 | A1 | 10-08-2006 | NONE | | |
| GB 2419213 | A | 19-04-2006 | US 2007017727 A1<br>US 2006085112 A1 | | 25-01-2007<br>20-04-2006 |
| DE 10234593 | A1 | 19-02-2004 | WO 2004016484 A1<br>US 2006238026 A1 | | 26-02-2004<br>26-10-2006 |

EPO FORM P0459

For more details about this annex : see Official Journal of the European Patent Office, No. 12/82